# FASCICULE DE BREVET EUROPEEN

(11) **EP 3 056 289 B1**
(45) Date de publication et mention de la délivrance du brevet: **11.04.2018**
(21) Numéro de dépôt: 16305105.5
(22) Date de dépôt: 02.02.2016
(51) Int. Cl.: B07C 5/02, B07C 7/00

(54) **PROCÉDÉ ET DISPOSITIF DE TRI SÉLECTIF**
SELEKTIVES SORTIERVERFAHREN UND ENTSPRECHENDE VORRICHTUNG
SELECTIVE SORTING METHOD AND DEVICE

(30) Priorité: 10.02.2015 FR 1551082
(43) Date de publication de la demande: 17.08.2016
(73) Titulaire: Veolia environnement-VE, 75008 Paris (FR); Sileane, 42000 Saint-Etienne (FR)
(72) Inventeur: DOUBLET, Jérémy, 31450 Ayguesvives (FR); GAMBIER, Christophe, 31700 Blagnac (FR); HENRY, Hervé, 42210 Saint-Cyr-les-Vignes (FR); REYNARD, Julien, 63160 Montmorin (FR)
(74) Mandataire: Novagraaf Technologies

(56) Documents cités:
- WO-A1-98/19799
- WO-A2-2009/068792

## Description

### Domaine technique

La présente invention concerne de manière générale un procédé de tri sélectif pour identifier et trier des objets matériels de natures, de tailles, de masses et de formes différentes. La présente invention concerne également un dispositif apte à mettre en oeuvre un tel procédé de tri.

Plus précisément, l'invention concerne un procédé de tri sélectif d'un ensemble d'objets se trouvant sous forme d'un amas.

Le tri d'objets, lorsqu'il est réalisé manuellement, est une activité physiquement intense, se traduisant par la répétition à cadence élevée de gestes relativement amples et répétitifs, sollicitant fortement les membres, notamment supérieurs.

La répétition de ces gestes peut être à l'origine de troubles musculo-squelettiques qu'il convient d'éviter dans la mesure du possible afin de diminuer au maximum toute blessure ou gêne occasionnée par ce tri manuel.

De plus la préhension manuelle d'objets impose la présence d'opérateurs dans le même espace que les objets à trier, ce qui expose directement les opérateurs à des risques de toutes natures (atteintes physiques, coupures, piqures, salissures, poussière, etc...) engendrés par les objets à trier.

Le port d'équipements de protection individuelle (EPI), de même que l'aménagement des postes de travail (ventilation et infrastructure adéquat notamment) sont bien entendu de nature à réduire ces risques, mais ne peuvent totalement les supprimer.

Ainsi, pour diminuer les désagréments causés par des tris manuels, et pour faciliter le déplacement des objets encombrants et de masses importantes, des machines hydrauliques peuvent être employées dans des zones de tri. Comme exemple de machines hydrauliques, on peut citer des engins de chantier tels que des grues, ou encore des pelles mécaniques hydrauliques. Par contre, ces machines ne permettent pas d'atteindre des niveaux de performances et de productivité satisfaisantes. En outre, il est difficile de contrôler avec précision l'extraction d'un objet en particulier et de pouvoir l'observer dans sa globalité lors de son déplacement.

C'est pourquoi des systèmes automatisés sont mis au point dans l'industrie dans le but, notamment, de réduire l'exposition humaine à des situations dangereuses ou potentiellement dangereuses, de remplacer les opérations manuelles dans les tâches fastidieuses et répétitives, mais également afin d'augmenter les performances de tri en terme de qualité ou/et de productivité. Par exemple, dans le secteur agroalimentaire, des systèmes robotiques sont utilisés pour trier de manière efficace et rapide des fruits et légumes en fonction de différents critères prédéfinis, notamment physiques, comme la forme, la taille ou encore le niveau de maturité d'un produit organique.

A l'échelle industrielle, les tris automatisés actuels ne permettent pas de prendre en considération la totalité des critères précités ci-dessus de manière simultanée.

Typiquement, dans le domaine du traitement des déchets, le tri automatique doit être couplé à des opérations humaines. Plus précisément, un opérateur doit impérativement intervenir, souvent en fin de chaîne, pour trier chacun des déchets puisqu'il est le seul capable de reconnaitre la totalité des objets, alors que les machines de tri automatisé ne peuvent identifier qu'un certain nombre d'objets prédéfinis.

A cet effet, de grands progrès ont été réalisés sur des dispositifs de tri automatique, c'est-à-dire automatisant certaine tâches.

Des dispositifs de tri automatique et les procédés de tri les mettant en oeuvre, sont connus de l'homme du métier. Par exemple, la demande internationale WO 98/19799 divulgue un procédé ainsi qu'un dispositif de tri sélectif de déchets avec téléopérateur, comprenant des moyens de désignation sur écran tactile d'un objet à extraire, et des moyens d'extraction sélective commandés par désignation sur écran tactile de l'objet. Cette désignation permet un tri à distance, c'est-à-dire que toute préhension manuelle d'un objet quelconque ne nécessite pas la présence d'opérateur dans le même espace que les objets.

Par ailleurs, plus récemment, la demande internationale WO 2009/068792 décrit un procédé ainsi qu'un dispositif de tri sélectif améliorant ceux décrits dans WO 98/19799, en permettant notamment une cadence très élevée. Plus particulièrement, dans le dispositif de WO 2009/068792, il est possible de modifier l'apparence visuelle d'une image d'un objet ciblé sur un écran vidéo.

Cependant, il est à noter que ces dispositifs connus de l'art antérieur ne permettent pas le tri d'un amas pouvant contenir des objets de différentes formes et/ou différentes tailles et/ou différentes nature. En effet, ces dispositifs ne permettent que le tri d'objets se présentant préalablement sous forme unitaire.

Plus généralement, il est connu de l'homme du métier des dispositifs de tri automatisé permettant de trier des objets de natures, masses ou formes différentes tels que des déchets seulement si ces objets se présentent au préalable sous forme unitaire. Dans cette configuration, tous les objets sont séparés les uns des autres, de telle sorte qu'il est possible d'en distinguer leur contour, les objets restant sous forme d'amas étant alors triés manuellement.

### Description de l'invention

Ainsi, il existe donc un besoin réel de proposer un procédé et un dispositif qui permettent de trier un amas pouvant contenir des objets de tailles et/ou de formes et/ou de natures différentes, notamment des déchets, en permettant un accroissement de la productivité et de l'efficacité de n'importe quel procédé de tri de l'art antérieur, tout en diminuant, voire même en supprimant la pénibilité physique du tri grâce à l'utilisation d'interfaces plutôt que de contacts entre les objets et les opérateurs.

Il est à noter que par amas, on entend, au sens de la présente invention, un ensemble d'objets hétérogènes enchevêtrés et disposés de manière aléatoire les uns sur les autres, lesdits objets étant des déchets.

Dans ce contexte, le demandeur a mis au point un procédé qui surmonte les inconvénients de l'art antérieur et répond aux objectifs cités ci-dessus.

Plus particulièrement, la présente invention a pour objet un procédé de tri sélectif pour identifier et trier des objets matériels de natures, de tailles, et de formes différentes et se présentant sous la forme d'un amas, ledit procédé comprenant les étapes suivantes :
a) fournir un flux d'objets sous forme d'un amas, vers une zone de vision comprenant au moins deux capteurs de mesure de rayonnement électromagnétique, ladite zone se trouvant dans la zone d'action d'un robot muni d'un ou plusieurs organes de préhension ;
b) capturer au moins deux images bidimensionnelles de l'amas contenu dans ladite zone de vision à l'aide desdites capteurs de mesure de rayonnement électromagnétique, pour reconstruire une image virtuelle ou électronique de l'amas d'objets dans la zone de vision ;
c) traiter les informations résultant desdites images bidimensionnelles, et identifier toutes les zones de prise possibles associées à des objets présents dans l'amas pour ledit ou lesdits organes de préhension dudit robot ;
d) localiser, en position et orientation, lesdites zones de prise possibles, et
e) choisir l'une des zones de prise ;
f) définir automatiquement, pour un organe de préhension donné, une trajectoire de prise d'un objet correspondant à la zone de prise choisie ;
g) saisir l'objet unitaire correspondant selon la trajectoire définie ;
h) déplacer ledit objet unitaire saisi vers une zone de réception qui lui a été attribuée ;
i) déplacer ledit objet unitaire se trouvant dans ladite zone de réception vers un exutoire en fonction de la nature ;
ledit procédé étant caractérisé en ce que l'étape e) de choix d'une zone de prise est effectuée automatiquement, et en ce qu'on réalise une étape h'), entre les étapes h) et i), de définition de la nature de l'objet situé dans la zone de réception, à l'aide d'au moins un capteur mesurant au moins un rayonnement électromagnétique émis par ledit objet unitaire dans ladite zone de réception.

Il est à noter que l'amas d'objets pouvant être trié par le procédé selon l'invention, peut par exemple contenir, de manière non limitative, des objets encombrants ou des objets de petites tailles, des déchets quels qu'ils soient, industriels ou domestiques.

Ainsi, on entend par déchets, au sens de l'invention, tout objet, ou plus généralement tout bien meuble, dont le détenteur se défait ou dont il a l'intention ou l'obligation de se défaire, à des fins de valorisation ou d'élimination, que le détenteur soit un industriel, une collectivité ou un particulier.

Les objets de l'amas pouvant être triés par le procédé selon l'invention sont par exemple des ordures ménagères organiques ou non, des déchets électroniques, des déchets relatifs à la construction, des déchets d'ameublement, des déchets de l'industrie etc.

En règle générale, les objets que l'on souhaite trier sont acheminés jusqu'à un centre de traitement en vue de leur valorisation, par exemple en vue de leur recyclage. Il est à noter que les objets à trier sont typiquement disposés sous forme de vrac ou d'amas, pouvant comprendre un plus ou moins grand nombre d'objets enchevêtrés aléatoirement, dans une zone de réception du centre de traitement. Puis, ils sont généralement transférés vers des moyens de traitement et autres dispositifs spécifiques. Leur transfert, d'une zone de réception du centre de traitement vers des moyens de traitement, est réalisé en utilisant des moyens de transfert connus, comme par exemple, des pelles ou des convoyeurs.

Le procédé selon l'invention est ainsi alimenté par ces moyens de transfert d'objets à trier, lesdits objets à trier se trouvant généralement sous forme d'amas.

Puis, le procédé selon l'invention est mis en oeuvre pour identifier et trier une succession d'amas constitués d'objets matériels de natures, de formes et de tailles différentes.

La première étape a) du procédé selon l'invention consiste à alimenter une zone de vision se trouvant dans la zone d'action d'un robot muni d'un ou plusieurs organes de préhension, en objets se trouvant généralement sous forme d'amas.

L'alimentation de cette zone de vision en objets peut être réalisée soit suivant une alimentation en batch, soit suivant une alimentation continue.

Au sens de la présente demande, on entend par alimentation en batch, une alimentation par lot. En d'autres termes, l'alimentation de la zone de vision est discontinue. Un seul amas d'objets à la fois est traité. Dans cette configuration, tant que la totalité des objets n'a pas été triée, la zone de vision n'est pas alimentée. Mais lorsque le dernier objet contenu préalablement dans l'amas est saisi par au moins un organe de préhension dudit robot, un autre amas est déplacé dans la zone de vision pour être trié ultérieurement.

Au sens de la présente demande, on entend par alimentation continue, une alimentation sans désactivation du moyen permettant de fournir la zone de vision en objets. Dans cette configuration, des objets à trier sont déplacés vers la zone de vision en continu en adaptant la vitesse de déplacement des objets à trier.

La zone de vision comprend au moins deux capteurs de mesure de rayonnement électromagnétique. Il est également possible d'ajouter dans cette zone une source de rayonnement électromagnétique incident afin de permettre un niveau d'émission de rayonnement électromagnétique suffisant par l'amas d'objets.

Ces capteurs permettent de capturer, étape b) du procédé selon l'invention, au moins deux images bidimensionnelles de l'amas présent dans ladite zone de vision. Ces images bidimensionnelles permettent de reconstruire une ou plusieurs images virtuelles, ou électroniques, de l'amas d'objets dans la zone de vision. Ces images ne sont pas nécessairement visualisées sur un écran.

Ces images bidimensionnelles sont analysées et traitées, étape c) du procédé selon l'invention, dans le but d'identifier toutes les zones de prise possibles pour le ou les organes de préhension du robot et d'identifier l'organe de préhension le plus adapté pour chacune des zones de prises possibles, lesdites zones étant associées à des objets présents dans l'amas.

Il est à noter que par zone de prise, ou zone spécifique, on entend au sens de la présente invention, une zone pouvant être saisie par un quelconque organe de préhension d'un robot. Il est à noter également que plusieurs zones de prise peuvent être associées à un objet contenu dans l'amas.

Le traitement de ces images bidimensionnelles peut, par exemple, se faire à l'aide de logiciels calculatoires et de logiciels de traitement d'image.

Après que toutes les zones de prise ont été identifiées grâce aux traitements et aux analyses des images bidimensionnelles, les zones de prise sont localisées en position et en orientation, étape d) du procédé selon l'invention.

Puis, le choix de l'une des zones de prise, étape e) du procédé selon l'invention, est réalisé automatiquement grâce à l'utilisation d'un algorithme. Ledit choix, ou sélection, d'une zone spécifique peut donc être réalisé sans l'intervention d'un opérateur.

D'une manière avantageuse, l'algorithme peut calculer la probabilité de réussite de la saisie de chaque zone de prise par un des organes de préhension du robot, et grâce aux utilisations combinées de logiciels calculatoires et de logiciels de traitements d'images, chaque zone de prise identifiée est pondéré avec un coefficient (dit de pondération) qui est fonction des probabilités de réussites de la saisie par un organe de préhension d'un robot. Une fois que chaque zone de prise a été associée à un coefficient particulier, la zone de prise ayant le plus de probabilité de réussite à la saisie est saisie par un organe de préhension d'un robot en priorité.

Il est à noter que le coefficient de pondération peut en outre être fonction d'un certain nombre de paramètres. Il peut, par exemple, être fonction de la distance qui sépare la zone de prise possible localisée de l'organe de préhension correspondant. Le coefficient de pondération peut également être calculé en fonction de l'orientation de la zone à saisir. Les probabilités de réussites dépendent de l'organe de préhension utilisé.

D'autres paramètres peuvent être pris en considération comme la position verticale ou l'altitude de chacune des zones de prise localisées. Le coefficient de pondération peut ainsi prendre en compte ce paramètre, pour que par la suite, l'organe de préhension saisisse en priorité l'objet associé à la zone de prise identifiée comme étant la plus haute.

Préférentiellement, l'un des organes du robot saisit en priorité la zone de prise associée à la probabilité de réussite de la saisie la plus élevée.

Il est à noter que lors de cette saisie, la trajectoire de prise du robot peut être calculée par l'utilisation de logiciels calculatoires, étape f) du procédé selon l'invention. En outre, une trajectoire particulière de saisie peut être associée à chaque zone de prise. Le procédé est alors avantageux du fait qu'il est possible de saisir et de déposer rapidement un objet unitaire.

Le robot peut alors saisir l'objet unitaire caractérisé par la zone de prise à saisir en priorité selon une trajectoire définie ((étape g) selon le procédé de l'invention).

Après que le robot a saisi la zone de prise prioritaire, et définie par l'algorithme, à l'aide de l'un de ses organes de préhension, l'objet unitaire associé à cette zone de prise est transféré de la zone de vision à une zone de réception, étape h) du procédé selon l'invention.

Ensuite, l'étape consistant à définir la nature de l'objet unitaire, étape h') du procédé selon l'invention saisi est effectuée dans la zone de réception, et plus particulièrement entre les étapes h) et i) précédemment citées.

Il est à noter que selon l'invention, la zone de vision de l'amas d'objets et la zone de réception de l'objet unitaire sont des zones distinctes, c'est-à-dire des volumes du centre de traitement distincts.

Selon une variante avantageuse du procédé selon l'invention, l'étape consistant à définir la nature de l'objet, étape h') du procédé selon l'invention, dans la zone de réception est réalisée par la récupération de mesures capturées par un ou plusieurs capteurs mesurant un ou plusieurs rayonnements électromagnétiques du spectre visible ou non visible, et par la comparaison de ces mesures à un ensemble de données enregistrées dans une mémoire, en utilisant un programme informatique.

Selon une autre variante avantageuse du procédé selon l'invention, l'étape consistant à définir la nature de l'objet, étape h') du procédé selon l'invention, dans la zone de réception est réalisée par la récupération d'images de l'objet unitaire par une ou plusieurs caméras et par la comparaison des images de l'objet unitaire obtenues à un ensemble de données enregistrées dans une mémoire, en utilisant un programme informatique.

Selon une dernière variante avantageuse du procédé selon l'invention, l'étape consistant à définir la nature de l'objet, étape h') du procédé selon l'invention est réalisée par la récupération par un interrogateur radiofréquence d'un signal radiofréquence transmis par un transpondeur apposé ou intégré à l'objet unitaire, ledit signal étant comparé à un ensemble de données enregistrées dans une mémoire, en utilisant un programme informatique.

Il est à noter que l'interrogateur peut être un système radiofréquence actif qui active et lit des données d'identification intégrées à l'objet dont la nature doit être identifiée. Cette identification est réalisée à l'aide d'un transpondeur, et par comparaison de ces données à un ensemble de données enregistrées dans une mémoire.

Selon cette variante, le couple interrogateur / transpondeur peut par exemple être un couple lecteur RFID / tag RFID. Cette variante suppose que les objets de l'amas soient équipés d'un transpondeur.

Grâce à la comparaison des mesures ou images récupérées par un ou plusieurs capteurs de rayonnement électromagnétique, ou caméras, avec des données enregistrées dans une mémoire, il est possible de qualifier la nature de l'objet unitaire situé dans la zone de réception de manière automatique, c'est-à-dire sans l'intervention d'un opérateur.

Une fois qu'une nature a été attribuée à l'objet unitaire se trouvant dans la zone de réception, il est déplacé vers un exutoire prédéfini en fonction de la nature qui lui a été attribuée ((étape i) selon le procédé de l'invention).

Selon le procédé de l'invention, tous les objets constituant l'amas initial sont triés. En d'autres termes, la totalité des objets arrivant dans la zone de vision est saisie par le robot puis déplacée dans la zone de réception.

La présente invention a encore pour objet un dispositif de tri sélectif, susceptible de mettre en oeuvre le procédé précédemment décrit, et comprenant :
- des moyens pour fournir un flux d'objets se présentant sous la forme d'un amas ;
- des capteurs de mesure de rayonnement électromagnétique situés dans la zone de vision ;
- des logiciels de traitement d'image et de calcul pour traiter les informations résultantes desdites images capturées en zone de vision et pour identifier et localiser des zones de prise des objets de l'amas ;

- un robot mécanique muni d'au moins un organe de préhension pour saisir un objet défini par une ou plusieurs zones de prise dans l'amas et le déplacer d'une zone de vision vers une zone de réception ;
- des moyens permettant d'identifier la nature de l'objet unitaire situé dans la zone de réception ;
- des logiciels de traitement et de calcul pour permettre de traiter les informations résultantes desdits moyens permettant d'identifier la nature de l'objet unitaire en zone de réception ;
- des moyens pour évacuer l'objet placé dans la zone de réception.

Le dispositif selon l'invention est avantageux car il permet un tri sélectif à distance en évitant tout contact entre un opérateur et un quelconque objet à trier. En outre, le dispositif selon l'invention permet de trier des amas d'objets contenant de multiples objets matériels, notamment des déchets, pouvant être de natures, tailles et formes différentes.

Le dispositif selon l'invention comprend des moyens permettant de fournir un flux d'objets se présentant sous forme d'amas. Par exemple, ces moyens peuvent être des convoyeurs à bande ou à rouleaux, des convoyeurs à galets, des tables à billes, des tables vibrantes, des dispositifs mécaniques comprenant des moyens de préhension, ou tout autre dispositif permettant de déplacer un amas d'objet d'un point initial à un autre point. Des bennes de collecte dans lesquelles sont placés les objets à trier peuvent également être utilisées. Dans cette configuration, la benne est statique pendant le procédé de tri ainsi que pendant la préhension de chacun des objets qu'elle contient. Par contre, dès que ladite benne est vide, une benne contenant des objets à trier est acheminée dans la zone de vision et remplace ainsi la benne vide. Il est également possible que la benne vide soit directement remplie par un véhicule de collecte ce qui évite le remplacement de la benne.

Le flux d'objets alimente une zone du dispositif selon l'invention, appelée zone de vision, en amas d'objets. Dans le cas de l'utilisation d'une benne comme moyen permettant de fournir le flux d'objets, la zone de vision est confondue avec le volume de la benne.

Le dispositif selon l'invention comprend en outre un robot mécanique muni d'au moins un organe de préhension permettant, dans un premier temps, de saisir un objet contenu dans l'amas présent au préalable dans la zone de vision, chaque objet de l'amas étant défini par une ou plusieurs zones de prise, et dans un second temps de déplacer l'objet saisi de la zone de vision vers une autre zone, dite zone de réception.

Avantageusement, les capteurs de mesure de rayonnement électromagnétique de la zone de vision du dispositif de tri sélectif selon l'invention sont des caméras ou des capteurs de distance à balayage laser.

Les mesures de rayonnement électromagnétique permettent au robot de saisir un objet particulier par une zone de prise présélectionnée. Ces mesures de rayonnement électromagnétique peuvent également être analysées et traitées par des logiciels calculatoires et de traitement d'image afin de permettre l'identification et la localisation de toutes les zones de prise possibles.

C'est pourquoi, le ou les caméras ou capteurs de distance à balayage peuvent être avantageusement connectés à des moyens d'analyse d'image.

Il est à noter qu'un objet contenu dans l'amas peut être associé à plusieurs zones de prise ou zones spécifiques, les mesures de rayonnement électromagnétique et logiciels calculatoires permettant selon l'invention de définir des zones de prise et non d'identifier les objets.

Le dispositif peut comprendre en outre des moyens de traitement et de calcul capables d'associer automatiquement à une surface de préhension sélectionnée par un automate, l'organe du robot le plus adapté.

Avantageusement, le dispositif peut comprendre en outre des moyens de traitement et de calcul capables de définir automatiquement une trajectoire de prise d'un objet par la zone spécifique compatible, présélectionnée par un automate, pour un organe de préhension particulier d'un robot mécanique.

De cette façon, le trajet suivi par un quelconque organe de préhension du robot est optimisé. Il est le plus rapide possible et également le plus court possible.

Dans la zone de réception, les moyens permettant d'identifier la nature de l'objet unitaire saisi sont avantageusement choisis parmi des capteurs de type spectrométrique ou spectroscopique permettant de reconstruire une image spectrale ou multispectrale ou hyperscpectrale, des capteurs optiques, des antennes radioélectriques ou radiofréquences, des caméras ou des capteurs de mesure de rayonnement électromagnétique. Les capteurs susmentionnés peuvent également être utilisés en combinaison.

Il est à noter que les antennes radioélectriques peuvent être mise en oeuvre pour mémoriser et récupérer des données à distance en utilisant des marqueurs ou transpondeurs, lesdits marqueurs étant disposés au préalable sur chacun des objets contenus dans l'amas à trier. Des capteurs aptes à capter des ondes radios de type hertzien ou des capteurs multibandes LIBS peuvent également être utilisés.

Au sens de la présente demande, on entend de manière non limitative par capteurs de mesure de rayonnement électromagnétique des capteurs de rayonnement infrarouge ou proche infrarouge, des capteurs de rayonnement ultraviolet, des capteurs de rayonnement X, des capteurs de rayonnement gamma, des capteurs de rayonnement micro onde, des capteurs de rayonnement radiofréquence ou encore des capteurs d'image bidimensionnelle comme des caméras en spectre visible. Les capteurs susmentionnés peuvent également être utilisés en combinaison.

De préférence, les images, ou mesures, récupérées par un ou plusieurs des capteurs susmentionnées sont comparées à un ensemble de données enregistrées dans une mémoire, en utilisant un programme informatique.

Il est à noter également que les différents capteurs de rayonnement précédemment mentionnés sont choisis en fonction de la ou des sources de rayonnement électromagnétique utilisées.

Les moyens susmentionnés permettant d'attribuer une nature à l'objet saisi au préalable par le robot sont avantageusement placés dans la zone de réception de sorte que dès qu'un organe de préhension d'un robot y dépose un objet particulier, une nature lui est attribuée grâce à l'utilisation d'un ou plusieurs des capteurs susmentionnés et qui peuvent permettre de caractériser la matière de l'objet unitaire, ou de lui en attribuer une lorsqu'il est présent dans la zone de réception.

Selon une variante du dispositif selon l'invention, les moyens susmentionnés permettant d'attribuer une nature à l'objet unitaire saisi par le robot sont éventuellement placés sur le bras du robot ou sur l'organe de préhension de celui-ci de sorte qu'une nature soit attribuée à l'objet pendant le déplacement de celui-ci par le robot, sans que l'objet soit déposé préalablement. Ceci est rendu possible par le fait que la zone de réception soit un volume du centre de traitement distinct du volume de la zone de vision et limité par le volume pouvant être parcouru par le robot mécanique et le dispositif de préhension associé. Ainsi, lorsque le dispositif de préhension a quitté le volume de la zone de vision, l'identification de la nature de l'objet saisi peut débuter, sans attendre de déposer l'objet unitaire.

De préférence, les mesures récupérées par le ou les capteurs permettant de caractériser la matière de l'objet unitaire, ou de lui en attribuer une, lorsqu'il est situé dans la zone de réception sont comparées, à l'aide d'un programme informatique, à un ensemble de données enregistrées dans une mémoire.

De cette façon, la nature de l'objet unitaire peut être qualifiée de manière automatique, c'est-à-dire sans l'intervention d'un opérateur.

Après qu'une nature a été attribuée à un objet placé dans la zone de réception, l'objet saisi est évacué de ladite zone de réception vers un exutoire, par des moyens d'acheminement en fonction de la nature qui lui a été attribuée.

Avantageusement, les moyens pour évacuer l'objet unitaire de la zone de réception sont choisis parmi un convoyeur à bande, un robot mécanique, une table vibrante, ou le même robot mécanique utilisé pour déplacer un objet unitaire de la zone de vision vers la zone de réception.

En outre ces moyens d'acheminement peuvent également être des convoyeurs à rouleaux, des convoyeurs à galets, des tables à bille, des dispositifs mécaniques comprenant des moyens de préhension, ou tout autre dispositif permettant de déplacer un amas d'objet d'un point initial à un autre point.

Ces moyens d'acheminement peuvent également être le robot mécanique lui-même, ce dernier étant alors à la fois dispositif de saisi de l'objet unitaire au sein de l'amas d'objets et dispositif d'acheminement vers un exutoire en fonction de la nature. Cette variante du dispositif selon l'invention est particulièrement intéressante lorsque les moyens d'identification de la nature de l'objet saisi par le robot mécanique sont disposés sur le bras de ce dernier ou sur le dispositif de préhension de ce dernier.

L'objet transitant sur ces moyens d'acheminement est déplacé dans un exutoire prédéfini en fonction de la nature qui lui a été attribuée.

Par exemple, les exutoires peuvent comprendre des bras manipulateurs ou des robots adaptés aux caractéristiques des objets à extraire. Ces exutoires peuvent également comprendre des dispositifs d'éjection pneumatique en jetée de tapis d'acheminement, des buses à air comprimé, des systèmes d'aiguillage, des poussoirs employant des vérins, des trappes, des robots. Des moyens d'extraction combinant différents dispositifs d'éjection précités peuvent être appliqués.

En outre, le dispositif selon l'invention peut comprendre des moyens pour relever et suivre les mouvements et les positions d'un objet particulier, entre le dispositif de préhension d'un robot et un exutoire, en fonction du temps. Ces moyens peuvent comprendre des capteurs de rayonnement électromagnétique tels que cités précédemment.

### Brève description des figures

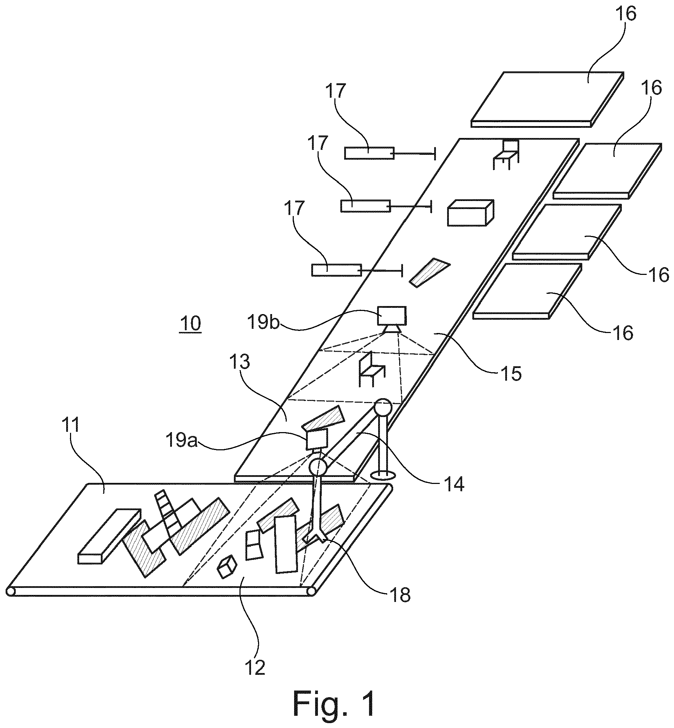

D'autres caractéristiques et avantages de la présente invention apparaîtront plus clairement à la lecture de la description suivante donnée à titre d'exemple illustratif et non limitatif et faite en référence à la figure 1 annexée et qui illustre un dispositif selon l'invention, vue en tridimensionnelle, apte à trier la totalité des objets contenus dans l'amas initial.

### Modes de réalisation

Dans l'exemple présenté ci-après, à titre indicatif et non limitatif, on utilise dans un dispositif selon l'invention illustré sur la figure 1, une solution robotisée commercialisée par la société SILEANE ou par la société AKEO. Ces dispositifs comprennent un robot qui comprend un système polyarticulé muni d'un ou plusieurs organes de préhension capable de saisir un objet par une zone spécifique. Pour faciliter la lecture des figures, un seul organe de préhension est représenté sur la figure 1.

Cependant, de préférence, le robot peut comprendre au moins deux organes de préhension, le premier utilisant une technologie dite « ventouse » et l'autre une technologie dite « pince ».

Le robot représenté dans la figure 1 comprend un seul organe de préhension utilisant la technologie « pince ».

La figure 1 décrit un dispositif 10 selon l'invention, permettant de trier la totalité des objets contenus dans un amas, en fonction de leur nature.

L'amas d'objets comprend un vrac volumique d'objets hétérogènes placés aléatoirement de sorte que les objets s'enchevêtrent.

Tel que présenté sur la figure 1, l'amas d'objets, en vue de son traitement, est disposé sur un premier convoyeur à bande 11.

Ce premier convoyeur à bande 11 est apte à alimenter une zone, dite zone de vision 12, en amas d'objets matériels.

Le dispositif de la figure 1 comprend une caméra 19a en spectre visible afin de réaliser une ou plusieurs images bidimensionnelles de l'amas d'objets situé dans la zone de vision 12.

Dans ces conditions, la caméra 19a est configurée pour acquérir des images bidimensionnelles successives de l'amas situé dans la zone de vision 12. Il est à noter que les images capturées couvrent la totalité de l'amas d'objets.

Une ou plusieurs desdites images de l'amas d'objets capturées sont ensuite éventuellement traitées et analysées pour permettre l'identification et la localisation de chaque zone de prise possible par un organe de préhension 18 du robot 14 polyarticulé.

Pour ce faire, la caméra 19a est, par exemple, couplée à des moyens de traitement, pouvant être des calculateurs et autres logiciels, configurés pour traiter les images issues desdits capteurs.

Les utilisations combinées de logiciels calculatoires et de logiciels de traitements d'images permettent de pondérer chaque zone de prise préalablement identifiée avec un coefficient qui est en fonction des probabilités de réussites de la saisie par l'organe de préhension correspondant, et de choisir la zone de prise ayant le plus de probabilités de réussites à la saisie.

Le coefficient de pondération peut être fonction de tout type de paramètre. Il peut, par exemple, être fonction de la distance qui sépare la zone de prise possible localisée de l'organe de préhension 18 correspondant. Le coefficient de pondération peut également être calculé en fonction de l'orientation de la zone à saisir. Les probabilités de réussites sont fonction de l'organe de préhension 18 utilisé.

Selon le dispositif 10 de la figure 1, un organe de préhension 18 saisit en priorité la zone de prise associée à la plus forte probabilité de réussite de la saisie.

Le dispositif de la figure 1 peut utiliser en outre des logiciels calculatoires et de traitement d'images pour permettre également de définir la trajectoire de prise la plus rapide et la plus courte possible, pour un organe de préhension 18 donné.

Il est à noter que pour permettre l'obtention d'images représentatives de la réalité, la vitesse du flux d'objets se dirigeant vers la zone de vision 12, par l'utilisation d'un convoyeur à bande 11 selon la figure 1, n'est éventuellement pas constante. Par exemple, lorsqu'un amas d'objets atteint la zone de vision 12, la vitesse du flux d'objets diminue, voire s'annule, afin que les capteurs présents dans la zone de vision 12 puissent capter au moins deux images bidimensionnelles représentant l'amas d'objets.

Un des organes de préhension 18 d'un robot 14 peut donc se charger de saisir un objet particulier associé à la zone spécifique considérée comme étant prioritaire comme expliqué précédemment.

Après chaque saisie, les capteurs capturent de nouvelles images de l'amas d'objets. De cette façon, l'objet à saisir, qui a pu être déplacé par la saisie d'un objet précédent, sera quand même localisé et saisi.

Les étapes énumérées précédemment sont reproduites jusqu'à ce que l'amas ne contienne plus aucun objet.

Lorsqu'il n'y a plus d'objets dans la zone de vision 12, ou sur ordre d'un opérateur, le premier convoyeur à bande 11 se remet en fonctionnement afin d'amener dans cette zone de vision 12 un nouvel amas d'objets à trier.

Toutefois, le convoyeur à bande 11 aurait très bien pu fonctionner en continu, à une vitesse raisonnable afin de permettre au robot 14 de saisir un objet particulier.

Ensuite, dans le dispositif 10 de l'invention illustré sur la figure 1, il n'est pas nécessaire que la ou les images capturées par la caméra soient transférées sur un écran vidéo puisque les images préalablement capturées ne sont utiles que pour identifier et localiser automatiquement chaque zone de prise possible par un organe de préhension 18.

Il est à noter qu'ici, aucun opérateur n'intervient. Le choix de l'une quelconque des zones de prise est effectué automatiquement suivant les différents coefficients qui ont été associés à chacune des prises spécifiques.

En outre, une butée amovible est éventuellement disposée au bout du convoyeur à bande 11 pour éviter qu'une partie de l'amas d'objets à trier ne soit projetée en dehors du dispositif de tri lorsque ce premier convoyeur à bande 11 est en fonctionnement.

Ensuite, chacun des objets saisis par un quelconque organe de préhension 18, comme présenté ci-dessus, est disposé, selon la figure 1, dans une zone de réception 13 située sur un deuxième convoyeur à bande 15.

Dans cette zone de réception est réalisée l'opération d'attribution d'une nature à un objet unitaire préalablement saisi par ledit robot 14. Cette attribution ne nécessite pas l'intervention d'un opérateur et peut donc être totalement automatique. Par exemple, l'opération d'attribution d'une nature à un objet particulier peut être effectuée grâce à l'utilisation de capteurs de type spectrométrique ou spectroscopique, référencés 19b sur la figure 1, afin de permettre la reconstruction d'une image spectrale, multispectrale ou hyperspectrale et ainsi de caractériser la surface ou le matériau d'un objet donné et de lui associer une nature en fonction des résultats obtenus. Ces capteurs sont couplés à des programmes informatiques afin de permettre la comparaison des rayons électromagnétiques reçus avec un ensemble de données enregistrées dans une mémoire. Il est à noter que le programme informatique peut contenir un nombre infini de natures préenregistrées et ainsi permettre l'identification d'une quelconque nature.

D'après la figure 1, après l'attribution d'une nature particulière à un objet, l'objet est dirigé vers un exutoire 16 prédéfini, dans un premier temps, grâce à l'utilisation d'un deuxième convoyeur à bande 15 et dans un deuxième temps grâce à l'utilisation d'un ou plusieurs moyens d'extraction 17.

Comme présenté dans la figure 1, les moyens d'extraction 17 permettent d'extraire les objets situés sur le deuxième convoyeur à bande 15 et de les acheminer vers les exutoires 16 appropriés destinés à les recevoir. La figure 1 montre que ces exutoires 16 comprennent des dispositifs d'éjection pneumatique utilisant des vérins.

En outre, des moyens peuvent être utilisés pour relever et suivre les mouvements et les positions d'un objet particulier, entre le dispositif de préhension 18 d'un robot 14 et un exutoire 16, en fonction du temps.

## Revendications

1. Procédé de tri sélectif pour identifier et trier des objets matériels de type déchets, de natures, de formes et de tailles différentes et se présentant sous la forme d'un amas, ledit procédé comprenant les étapes suivantes :
a) fournir un flux d'objets sous forme d'un amas, vers une zone de vision (12) comprenant au moins deux capteurs de mesure de rayonnement électromagnétique, ladite zone se trouvant dans la zone d'action d'un robot (14) muni d'un ou plusieurs organes de préhension ;
b) capturer au moins deux images bidimensionnelles de l'amas contenu dans ladite zone de vision (12) à l'aide desdits capteurs de mesure de rayonnement électromagnétique, pour reconstruire une image virtuelle ou électronique de l'amas d'objets dans la zone de vision (12) ;
c) traiter les informations résultant desdites images bidimensionnelles, et identifier toutes les zones de prise possibles associées à des objets présents dans l'amas pour ledit ou lesdits organes de préhension dudit robot (14);
d) localiser, en position et orientation, lesdites zones de prise possibles, et
e) choisir l'une des zones de prise ;
f) définir automatiquement, pour un organe de préhension (18) donné, une trajectoire de prise d'un objet correspondant à la zone de prise choisie ;
g) saisir l'objet unitaire correspondant selon la trajectoire définie ;
h) déplacer ledit objet unitaire saisi vers une zone de réception (13) ;
i) déplacer ledit objet unitaire se trouvant dans ladite zone de réception (13) vers un exutoire (16) en fonction de la nature qui lui a été attribuée,
ledit procédé étant tel que l'étape e) de choix d'une zone de prise est effectuée automatiquement, et en ce qu'on réalise une étape h'), entre les étapes h) et i), de définition de la nature de l'objet situé dans la zone de réception (13), à l'aide d'au moins un capteur mesurant au moins un rayonnement électromagnétique émis par ledit objet unitaire dans ladite zone de réception (13).

2. Procédé de tri sélectif selon la revendication 1, dans lequel l'étape h') est réalisée par la récupération de mesures capturées par un ou plusieurs capteurs mesurant un ou plusieurs rayonnements électromagnétiques, du spectre visible ou non visible, et par la comparaison de ces mesures à un ensemble de données enregistrées dans une mémoire, en utilisant un programme informatique.

3. Procédé de tri sélectif selon la revendication 1, dans lequel l'étape h') est réalisée par la récupération d'images de l'objet unitaire par une ou plusieurs caméras et par la comparaison des images de l'objet unitaire obtenues à un ensemble de données enregistrées dans une mémoire, en utilisant un programme informatique.

4. Procédé de tri sélectif selon la revendication 1, dans lequel l'étape h') est réalisée par la récupération par un interrogateur radiofréquence d'un signal radiofréquence transmis par un transpondeur apposé ou intégré à l'objet unitaire, ledit signal étant comparé à un ensemble de données enregistrées dans une mémoire, en utilisant un programme informatique.

5. Procédé de tri sélectif selon l'une quelconque des revendications 1 à 4, dans lequel le choix automatique de l'une des zones de prise de l'étape e) est défini par l'utilisation d'un algorithme.

6. Procédé de tri sélectif selon l'une quelconque des revendications 1 à 5, dans lequel ledit algorithme calcule la probabilité de réussite de la saisie de chaque zone de prise par un des organes de préhension dudit robot (14).

7. Procédé de tri sélectif selon la revendication 6, dans lequel un des organes de préhension dudit robot (14) choisit en priorité la zone de prise associée à la probabilité de réussite de la saisie la plus élevée.

8. Dispositif de tri sélectif, susceptible de mettre en oeuvre le procédé selon l'une quelconque des revendications 1 à 7, et comprenant :
- des moyens pour fournir un flux d'objets se présentant sous la forme d'un amas ;
- des capteurs de mesure de rayonnement électromagnétique en zone de vision (12);
- des logiciels de traitement d'image et de calcul pour traiter les informations résultantes desdites images capturées en zone de vision (12) et pour identifier et localiser des zones de prise des objets de l'amas ;
- un robot (14) mécanique muni d'au moins un organe de préhension (18) pour saisir un objet défini par une ou plusieurs zones de prise dans l'amas et le déplacer d'une zone de vision (12) vers une zone de réception (13) ;
- des moyens permettant d'identifier la nature de l'objet unitaire en zone de réception (13) ;
- des logiciels de traitement et de calcul pour permettre de traiter les informations résultantes desdits moyens permettant d'identifier la nature de l'objet unitaire en zone de réception (13) ;
- des moyens pour évacuer l'objet placé dans la zone de réception (13) ;
- des moyens pour évacuer l'objet unitaire vers un exutoire (16) en fonction de la nature qui lui a été attribuée.

9. Dispositif de tri sélectif selon la revendication 8, comprenant des moyens de traitement et de calcul pour définir automatiquement une trajectoire de prise dudit objet par ledit robot (14).

10. Dispositif de tri sélectif selon l'une quelconque des revendications 8 ou 9, dans lequel les capteurs de mesure de rayonnement électromagnétique en zone de vision (12) sont des caméras ou des capteurs de distance à balayage laser.

11. Dispositif de tri sélectif selon l'une quelconque des revendications 8 à 10, dans lequel lesdits moyens permettant d'identifier la nature de l'objet unitaire en zone de réception (13) sont choisis parmi des capteurs de type spectrométrique ou spectroscopique permettant de reconstruire une image spectrale ou multispectrale ou hyperspectrale, des capteurs optiques, des antennes radioélectriques ou radiofréquences, des caméras ou des capteurs de mesures de rayonnement électromagnétique dans le spectre visible ou non visible.

12. Dispositif de tri sélectif selon l'une quelconque des revendications 8 à 11, dans lequel lesdits moyens pour évacuer l'objet unitaire de la zone de réception (13) sont choisis parmi un convoyeur à bande, un robot mécanique, une table vibrante, ou le même robot mécanique (14) utilisé pour déplacer un objet unitaire de la zone de vision (12) vers la zone de réception (13) .

## Patentansprüche

1. Verfahren zum selektiven Sortieren, um materielle Objekte vom Typ Abfall verschiedener Arten, Formen und Größen und die die Form eines Haufens aufweisen, zu identifizieren und zu sortieren, wobei das Verfahren die folgenden Schritte umfasst:
a) Liefern eines Flusses von Objekten in Form eines Haufens in einen Sichtbereich (12), umfassend mindestens zwei Sensoren zum Messen elektromagnetischer Strahlung, wobei sich der Bereich im Wirkungsbereich eines Roboters (14) befindet, ausgestattet mit einem oder mehreren Greiforganen;
b) Aufnehmen von mindestens zwei zweidimensionalen Bildern des Haufens, der in dem Sichtbereich (12) enthalten ist, mit Hilfe der Sensoren zum Messen elektromagnetischer Strahlung, um ein virtuelles oder elektronisches Bild des Haufens von Objekten im Sichtbereich (12) zu rekonstruieren;
c) Verarbeiten der Informationen, die sich aus den zweidimensionalen Bildern ergeben, und Identifizieren aller möglichen Griffbereiche, die mit Objekten assoziiert sind, die in dem Haufen vorhanden sind, für das oder die Greiforgane des Roboters (14);
d) Lokalisieren, hinsichtlich Position und Ausrichtung, der möglichen Griffbereiche, und
e) Wählen eines der Griffbereiche;
f) automatisches Definieren, für ein gegebenes Greiforgan (18), eines Griffwegs eines Objekts, das dem gewählten Griffbereich entspricht;
g) Erfassen des einheitlichen Objekts gemäß dem definierten Weg;
h) Bewegen des erfassten einheitlichen Objekts in einen Aufnahmebereich (13);
i) Bewegen des einheitlichen Objekts, das sich in dem Aufnahmebereich (13) befindet, in einen Auslass (16), je nach der Art, die ihm zugeordnet wird,
wobei das Verfahren derart ist, dass Schritt e) des Auswählens eines Griffbereichs automatisch erfolgt, und dadurch, dass ein Schritt h'), zwischen den Schritten h) und i), des Definierens der Art des Objekts, das sich im Aufnahmebereich (13) befindet, mit Hilfe von mindestens einem Sensor durchgeführt wird, der mindestens eine elektromagnetische Strahlung misst, die von dem einheitlichen Objekt in dem Aufnahmebereich (13) emittiert wurde.

2. Verfahren zum selektiven Sortieren nach Anspruch 1, wobei Schritt h') durch die Wiedergewinnung von Messungen durchgeführt wird, die durch einen oder mehrere Sensoren aufgenommen wurden, die eine oder mehrere elektromagnetische Strahlen des sichtbaren oder nicht sichtbaren Spektrums messen, und durch den Vergleich dieser Messungen mit einer Gruppe von Daten, die in einem Speicher aufgezeichnet sind, unter Verwendung eines Computerprogramms.

3. Verfahren zum selektiven Sortieren nach Anspruch 1, wobei Schritt h') durch die Wiedergewinnung von Bildern des einheitlichen Objekts durch eine oder mehrere Kameras und durch den Vergleich der erhaltenen Bilder des einheitlichen Objekts mit einer Gruppe von Daten, die in einem Speicher aufgezeichnet sind, unter Verwendung eines Computerprogramms durchgeführt wird.

4. Verfahren zum selektiven Sortieren nach Anspruch 1, wobei Schritt h') durch die Wiedergewinnung durch eine Radiofrequenzabfrage eines Radiofrequenzsignals, übertragen durch einen Transponder, der an das einheitliche Objekt angebracht oder in dieses integriert ist, durchgeführt wird, wobei das Signal mit einer Gruppe von Daten, die in einem Speicher aufgezeichnet sind, unter Verwendung eines Computerprogramms verglichen wird.

5. Verfahren zum selektiven Sortieren nach einem der Ansprüche 1 bis 4, wobei die automatische Wahl des einen der Griffbereiche von Schritt e) durch die Verwendung eines Algorithmus definiert ist.

6. Verfahren zum selektiven Sortieren nach einem der Ansprüche 1 bis 5, wobei der Algorithmus die Wahrscheinlichkeit des Erfolgs der Erfassung jedes Griffbereichs durch eines der Greiforgane des Roboters (14) berechnet.

7. Verfahren zum selektiven Sortieren nach Anspruch 6, wobei eines der Greiforgane des Roboters (14) vorzugsweise den Griffbereich wählt, der mit der größten Wahrscheinlichkeit des Erfolgs der Erfassung assoziiert ist.

8. Vorrichtung zum selektiven Sortieren, das durch das Verfahren nach einem der Ansprüche 1 bis 7 durchgeführt werden kann, und Folgendes umfasst:
- Mittel zum Liefern eines Flusses von Objekten, die die Form eines Haufens aufweisen;
- Sensoren zum Messen elektromagnetischer Strahlung im Sichtbereich (12);
- Software zur Bildverarbeitung und zum Berechnen, um die Informationen zu verarbeiten, die sich aus den Bildern ergeben, aufgenommen im Sichtbereich (12), und um Griffbereiche der Objekte des Haufens zu identifizieren und zu lokalisieren;
- einen mechanischen Roboter (14), ausgestattet mit mindestens einem Greiforgan (18), um ein Objekt zu erfassen, definiert durch einen oder mehrere Griffbereiche im Haufen, und es von einem Sichtbereich (12) in einen Aufnahmebereich (13) zu bewegen;
- Mittel, die ermöglichen, die Art des einheitlichen Objekts im Aufnahmebereich (13) zu identifizieren;
- Software zur Verarbeitung und zur Berechnung, um zu ermöglichen, die Informationen zu verarbeiten, die sich aus den Mitteln ergeben, die ermöglichen, die Art des einheitlichen Objekts im Aufnahmebereich (13) zu identifizieren;
- Mittel, um das Objekt zu entfernen, das im Aufnahmebereich (13) angeordnet ist;
- Mittel, um das einheitliche Objekt in einen Auslass (16) zu entfernen, je nach der Art, die ihm zugeordnet wird.

9. Vorrichtung zum selektiven Sortieren nach Anspruch 8, umfassend Mittel zur Verarbeitung und zur Berechnung, um automatisch einen Griffweg des Objekts durch den Roboter (14) zu definieren.

10. Vorrichtung zum selektiven Sortieren nach einem der Ansprüche 8 oder 9, wobei die Sensoren zur Messung elektromagnetischer Strahlung im Sichtbereich (12) Kameras oder Abstandssensoren mit Laserscanning sind.

11. Vorrichtung zum selektiven Sortieren nach einem der Ansprüche 8 bis 10, wobei die Mittel, die ermöglichen, die Art des einheitlichen Objekts im Aufnahmebereich (13) zu identifizieren, ausgewählt sind aus den Sensoren vom Typ spektrometrisch oder spektroskopisch, die ermöglichen, ein spektrales oder multispektrales oder hyperspektrales Bild der optischen Sensoren zu rekonstruieren, radioelektrische Antennen oder Radiofrequenzen, Kameras oder Sensoren zur Messung elektromagnetischer Strahlungen im sichtbaren oder nicht sichtbaren Bereich.

12. Vorrichtung zum selektiven Sortieren nach einem der Ansprüche 8 bis 11, wobei die Mittel zum Entfernen des einheitlichen Objekts vom Aufnahmebereich (13) ausgewählt sind aus einem Förderband, einem mechanischen Roboter, einem Vibrationstisch oder dem mechanischen Roboter (14) selbst, der verwendet wird, um ein einheitliches Objekt aus dem Sichtbereich (12) in den Aufnahmebereich (13) zu bewegen.

## Claims

1. A selective sorting method in order to identify and sort material objects of waste-type, of different natures, shapes and sizes and having the form of a pile, said method comprising the following steps:
a) supplying a flow of objects in the form of a pile, to a zone of vision (12) comprising at least two sensors for measuring electromagnetic radiation, said zone of vision (12) being located in a zone of action of a robot (14) provided with one or several gripping members;
b) capturing at least two-dimensional images of the pile contained in said zone of vision (12) using said sensors for measuring electromagnetic radiation, in order to reconstruct a virtual or electronic image of the pile of objects in the zone of vision (12);
c) processing the information resulting from said two-dimensional images, and identifying all possible gripping zones associated with the objects present in the pile for said gripping member or members of said robot (14);
d) locating, in position and orientation, said possible gripping zones, and
e) choosing one of the gripping zones;
f) defining automatically, for a given gripping member (18), a trajectory for gripping an object corresponding to the chosen gripping zone;
g) grasping the corresponding unitary object according to the defined trajectory;
h) displacing said corresponding unitary object that is grasped to a receiving zone (13);
i) displacing said unitary object located in said receiving zone (13) to an outlet (16) according to the nature that has been attributed to it,
said method being such as step e) of choosing a gripping zone is carried out automatically, and in that a step h') is carried out, between steps h) and i), of defining the nature of object located in the receiving zone (13), using at least one sensor for measuring at least one electromagnetic ray emitted by said unitary object in said receiving zone (13).

2. The selective sorting method according to claim 1, wherein step h') is carried out by a recovery of measurements captured by one or several sensors that measure one or several electromagnetic radiations, of the visible or non-visible spectrum, and by comparing these measurements with a set of data recorded in a memory, by using a computer program.

3. The selective sorting method according to claim 1, wherein step h') is carried out by recovery of images of the unitary object by one or several cameras and by comparing images of the unitary object obtained with a set of data recorded in a memory, by using a computer program.

4. The selective sorting method according to claim 1, wherein step h') is carried out by collecting a radio frequency signal transmitted by a transponder affixed to or integrated into the single object, through a radio frequency interrogator, said signal being compared to a set of data recorded in a memory, by using a computer program.

5. The selective sorting method according to any one of claims 1 to 4, wherein the automatic choosing of one of the gripping zones of step e) is defined by the use of an algorithm.

6. The selective sorting method according to any one of claims 1 to 5, wherein said algorithm calculates the probability of success of the gripping of each gripping zone by one of the gripping members of said robot (14).

7. The selective sorting method according to claim 6, wherein one of the gripping bodies of said robot (14) chooses, with priority, the gripping zone associated with a highest probability of success for gripping.

8. The selective sorting method, likely to implement the method according to any one of claims 1 to 7, and comprising:
- means for supplying a flow of objects having the form of a pile;
- sensors for measuring electromagnetic radiation in the zone of vision (12);
- image processing and calculating software for processing the information resulting from said captured images in the zone of vision (12) and for identifying and for locating gripping zones of the objects of the pile;
- a mechanical robot (14) with at least one gripping member (18) to grip an object defined by one or several gripping zones in the pile and displace it from a zone of vision (12) to a receiving zone (13);
- means enabling to identify the nature of the unitary object in the receiving zone (13);
- processing and calculating software in order to process the information resulting from said means enabling to identify the nature of the unitary object in the receiving zone (13);
- means for discharging the object placed in the receiving zone (13);
- means for discharging the unitary object to an outlet (16) according to the nature that has been attributed to it.

9. The selective sorting device according to claim 8, comprising means for processing and for calculating in order to automatically define a gripping trajectory of said object by said robot (14).

10. The selective sorting device according to any one of claims 8 or 9, wherein the sensors for measuring electromagnetic radiation in the zone of vision (12) are cameras or laser scanning distance sensors.

11. The selective sorting device according to any one of claims 8 to 10, wherein said means enabling to identify the nature of the unitary object in the receiving zone (13) are chosen among spectrometric or spectroscopic-type sensors, enabling to reconstruct a spectral, multispectral or hyperspectral image, from optical sensors, radioelectric antennae or radio frequencies, cameras or sensors for measuring electromagnetic radiation in the visible or non-visible spectrum.

12. The selective sorting device according to any one of claims 8 to 11, wherein said means for discharging the unitary object from the receiving zone (13) are chosen among a belt conveyor, a mechanical robot, a vibrating table, or the same mechanical robot (14) used to move a unitary object from the zone of vision (12) to the receiving zone (13).
